# EUROPEAN PATENT SPECIFICATION

(11) **EP 0 478 242 B1**
(45) Date of publication and mention of the grant of the patent: **15.03.1995**
(21) Application number: 91308599.9
(22) Date of filing: 20.09.1991
(51) Int. Cl.: A21C 3/02

(54) **Method and apparatus for stretching dough**
Verfahren und Vorrichtung zum Ausstrecken von Teig
Méthode et appareil pour l'étirage de pâte

(30) Priority: 20.09.1990 JP 250762/90
(43) Date of publication of application: 01.04.1992
(73) Proprietor: RHEON AUTOMATIC MACHINERY CO. LTD., Utsunomiya-shi Tochigi-ken (JP)
(72) Inventor: Morikawa,Michio, Tochigi-ken (JP); Hayashi,Torahiko, Tochigi-ken (JP)
(74) Representative: Leale, Robin George

(56) References cited:
- EP-A- 0 309 005
- EP-A- 0 326 404
- EP-A- 0 386 988
- EP-A- 0 410 818
- US-A- 2 735 379

## Description

This invention relates to the stretching of bread or cake dough. More particularly, it relates to a method and apparatus whereby dough can be stretched and formed in a condition of uniform quality without its inner texture being destroyed.

In the apparatus of our U.S. Patent No. 4,692,110 a plurality of conveyors that are driven at different speeds are arranged in series, and rollers are disposed thereabove and arranged to rotate freely and to reciprocate in the travelling direction of the conveyors, so that dough carried thereon is stretched to produce a dough sheet of a uniform thickness.

This prior art technique is effective in stretching and thinning dough while it passes between the conveyors and rollers and is being compressed by means of the rollers. However, if flour dough is stretched, the technique has only a limited effect in that the stretching effect is limited to the travelling direction of the conveyor. This is because the protein in the dough when stretched in that direction hardens as it is stretched, thereby substantially preventing stretching in other directions.

Viewed from one aspect the present invention provides a method of stretching dough travelling on conveyor means, including rolling a pressure roller on the surface of the dough in a direction transverse to the travelling direction of the dough, while reciprocating the roller in the said travelling direction.

Viewed from another aspect the invention provides apparatus for carrying out the method set forth above, comprising dough conveyor means, a pressure roller located above said conveyor means, means for rolling said roller on the surface of dough thereon in a direction transverse to the travelling direction of the conveyor means, and means for reciprocating the roller in the said travelling direction.

Preferably the apparatus includes at least one further pressure roller located above the said conveyor means downstream of the first-mentioned roller, means for rolling said further roller on the surface of the dough in a direction parallel to the travelling direction of the dough, and means for reciprocating said further roller in the said travelling direction.

In use of such an apparatus the said rollers are simultaneously reciprocated in the travelling direction and in the transverse direction, to stretch the dough. The speed of the movement of each of the rollers in each direction can be adjusted, whereby the loci of the rolling of the rollers can be freely changed.

The selection of the loci of the rolling movements of the rollers enables the apparatus to stretch the dough in various directions so that a sheet of dough of a uniform thickness and of a uniform quality may be formed.

An embodiment of the invention will now be described by way of example and with reference to the accompanying drawings, in which:-
Fig. 1 is a side view of a roller assembly of an apparatus according to the invention;
Fig. 2 is a schematic top view of the roller assembly;
Fig. 3 is a partial perspective view of the apparatus;
Fig. 4 is a partial top view of a first roller of the apparatus;
Figs. 5, 6 and 7 are side views of roller assemblies used in conventional stretchers; and
Fig. 8 is a schematic diagram illustrating the loci of rollers in operation of this apparatus.

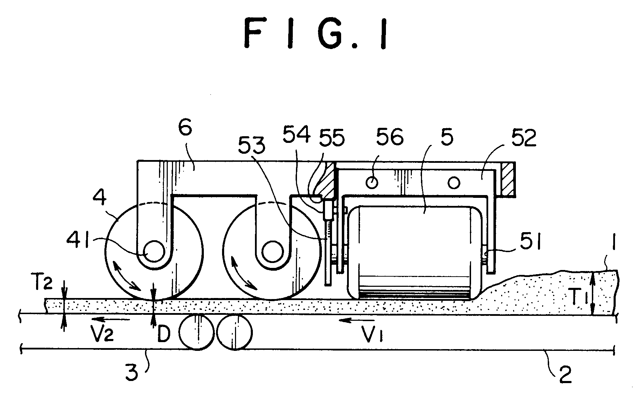

In Fig. 1 an upstream conveyor 2 and a downstream conveyor 3 are disposed in series. The upstream conveyor 2 receives from an upstream source a continuous mass of dough 1 of indeterminate form. The conveyors are independently driven by respective motors (not shown) so that the downstream conveyor 3 is driven at a higher speed than the upstream conveyor 2.

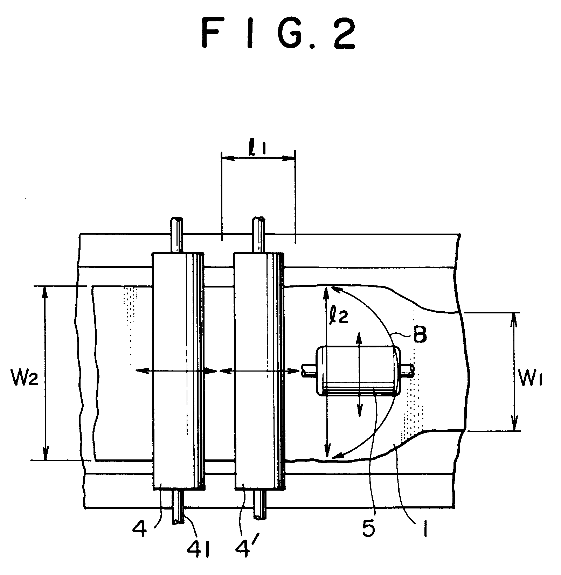

Three rollers 4, 4′ and 5 are supported by a roller frame 6, which is in turn slidably supported by a main frame of the apparatus (not shown), so that the frame 6 and the rollers can reciprocate over a given distance l₁ (Fig. 2) in the travelling direction of the conveyors.

The rollers 4, 4′ are disposed above the conveyors, and are spaced apart from the downstream conveyor 3 by a given distance D. The rollers bridge the conveyors, and their axes are perpendicular to the travelling direction of the dough on the conveyors.

The roller 5 is disposed upstream of the rollers 4, 4′. The gap between the conveyor 2 and the roller 5 is the same as or a little larger than the gap D between the conveyor 3 and the roller 4.

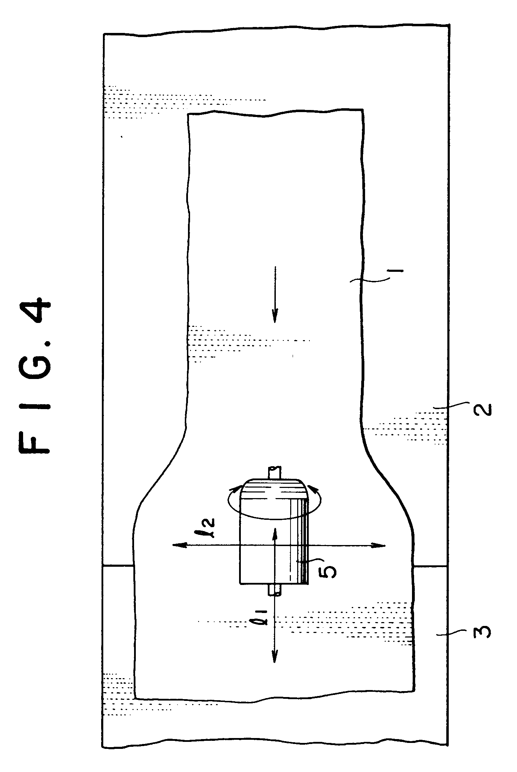

The roller 5 is oriented at right angles to the rollers 4, 4′, its axis being aligned with the travelling direction of the dough on the conveyors, as shown in Figs. 2 and 4. It is arranged to reciprocate over a given distance l₂.

The roller 4 is mounted on a shaft 41. A sprocket 42 is mounted on the shaft 41 and fixed thereto. The sprocket 42 meshes with a chain 71 which is driven by a variable-speed motor 7 and extends around two sprockets that are spaced apart from each other by a preset distance. The chain 71 moves parallel to the conveyors.

The shaft 41 is pivotally mounted on one end of a crank rod 81 which is driven by another variable-speed motor 8, whereby the shaft 41 is simultaneously rotated and reciprocated through the movement of the sprocket 42 on the chain 71 and the reciprocating crank motion of the crank rod 81. Hence, when the crank rod 81 is operated, the roller 4 can be both rolled and reciprocated.

The rollers 4 and 4′ are connected via a belt 43 so that the movement of the roller 4 is transmitted to the other roller 4′, and so that the latter can roll and reciprocate in the same manner as the roller 4. By adjusting the diameters of pulleys attached to the rollers and carrying the belt 43, the peripheral speed of the upstream roller 4′ may be set lower than that of the downstream roller 4.

In operation of this embodiment the variable-speed motor 7 is adjusted such that the speed of movement of the chain 71 is the same as the speed of the downstream conveyor 3. The roller 4 is reciprocated so that it moves between the upstream and downstream conveyors 2, 3. By adjusting the variable motor 7 and the transmission belt 43, the peripheral speed of the roller 4′ is kept higher than the speed of the upstream conveyor 2 and lower than the speed at which it rolls over the downstream conveyor 3, without causing substantially any friction with the dough.

The shaft 51 on which the roller 5 is mounted is supported at its ends by the arms of a U-shaped slider 52. A pinion 53 is mounted on one end of the shaft 51. A small-diameter pinion 54 is mounted on a wall of the slider 52 so as to mesh with the pinion 53. The pinion 54 engages a rack 55 which is fixed on the frame 6 in the direction transverse to the conveyors. The slider 52 is slidably mounted on two rods 56 that span the frame 6 in the direction transverse to the axis of the shaft 51.

The roller 5 is driven in rotation by an independent power source, such as a rotary actuator or a reversible motor (not shown) mounted on the shaft 51. The roller 5 is made to reciprocate by means of the pinions 53 and 54 and the rack 55.

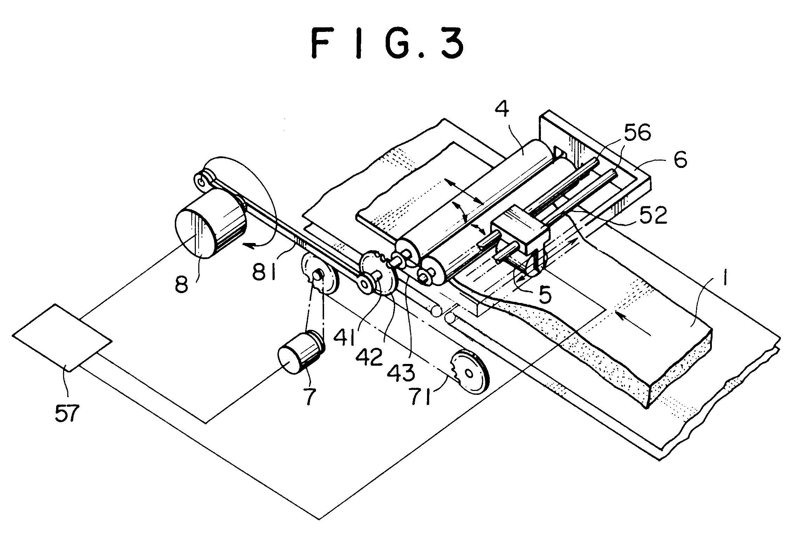

The speed of movement of the roller 5 can be changed by a regulator 57 (Fig. 3).

In a first embodiment, as shown in Fig. 2, the rolling locus of the roller 5 is such that when the roller makes one reciprocating stroke in the direction of movement of the conveyors, over the distance l₁, it makes one-half of a reciprocating stroke in the transverse direction over the distance l₂, so that the dough 1 being carried on the conveyor is stretched by the roller moving along the locus formed by the combined lengthwise and sidewise movements of the roller.

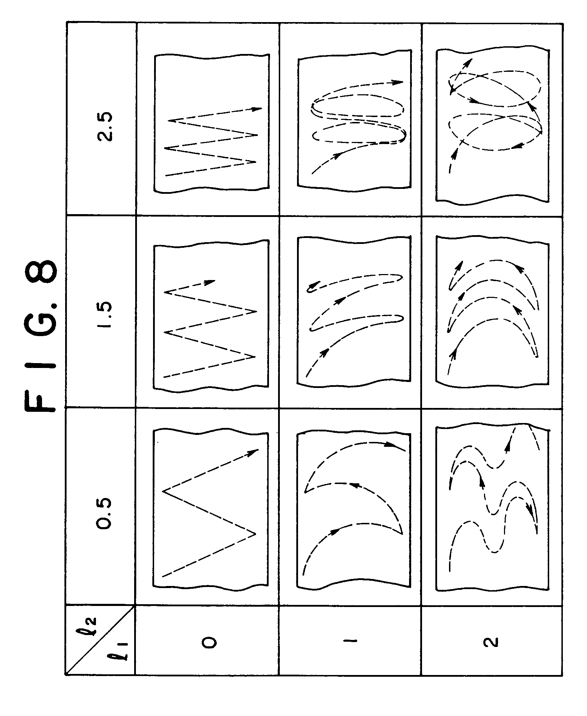

Fig. 8 shows nine combined loci that may be formed. While the roller makes no stroke, or makes one or two reciprocating strokes, in the lengthwise direction over the distance l₁, it can make a half, one and a half, or two and a half reciprocating strokes in the transverse direction over the distance l₂. The loci thus obtained are as shown in Fig. 8. If the roller makes no stroke in the lengthwise direction while it makes a half stroke in the transverse direction, the upper left locus will be produced. If the strokes in the transverse direction are increased to 1.5, the upper middle locus will be given. If the transverse strokes are increased to 2.5, the upper right locus will be given. If the roller makes one stroke in the lengthwise direction over the distance l₁, while it makes half a stroke transverse, the locus will be as shown in the second block in the lefthand column, and so on.

In the embodiments of this invention the roller 5 acts on the surface of the dough in various directions, so that dough having an inner texture of a uniform quality in any direction can be obtained.

Further, the rollers 4, 4′ of this apparatus stretch dough in the downstream and upstream directions in such a manner that the thickness of the dough can be adjusted.

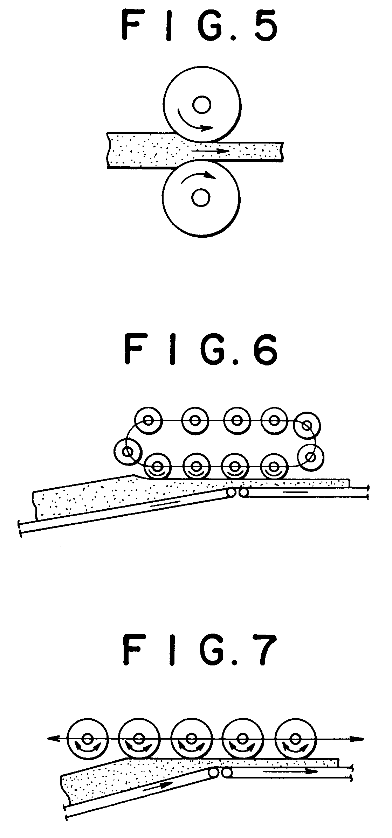

Experiments to evaluate the effects of this apparatus on bread dough have shown that when a dough sheet 20mm thick was stretched by the conventional rollers shown in Figs. 5, 6 and 7, each under similar conditions, the resulting sheets of dough were 10, 5 and 5mm thick, respectively. In contrast, under the same experimental conditions an apparatus of this invention achieved a sheet of dough 2mm thick. Namely, the reduction ratio using the apparatus of this invention was 1:10, while that using conventional rollers was 1:4 or 1:2.

Thus, as is explained above, by providing rollers that reciprocate in both the direction of travel of dough and the transverse direction, the method and apparatus of this invention can be used to stretch dough in various directions so that a sheet of a high quality dough with a uniform texture and thickness can be obtained from a continuous mass of dough of an initially indeterminate shape.

It will thus be seen that the present invention, at least in its preferred forms, enhances the stretching effect by simultaneously stretching the dough in a direction transverse to the travelling direction of the conveyor; and furthermore provides an effective method of stretching dough into a thin sheet of a uniform thickness; and furthermore provides a method of simultaneously stretching dough in both the longitudinal and transverse directions; and furthermore provides an apparatus having a roller that reciprocates in the transverse and longitudinal directions so that the dough can be stretched in more than one direction.

## Claims

1. A method of stretching dough (1) travelling on conveyor means, including rolling a pressure roller (5) on the surface of the dough in a direction transverse to the travelling direction of the dough, while reciprocating the roller in the said travelling direction.

2. A method as claimed in claim 1, including rolling at least one further pressure roller (4,4′) on the surface of the dough in a direction parallel to the travelling direction of the dough, while reciprocating said further roller in the travelling direction, the said further roller being located downstream of the first-mentioned roller.

3. A method as claimed in claim 2, wherein two of said further rollers (4,4′) are provided, in series in the said travelling direction.

4. A method as claimed in any of claims 1 to 3, wherein the said conveyor means comprises at least two conveyors (2,3) arranged in series, the downstream conveyor (3) moving faster than the upstream conveyor (2).

5. A method as claimed in claim 4, wherein the first-mentioned pressure roller (5) is always located above the said upstream conveyor (2).

6. A method as claimed in claim 4 or 5, when dependent on claim 3, wherein the boundary between the said conveyors (2,3) is located between the two said further rollers (4,4′).

7. Apparatus for carrying out the method of claim 1, comprising dough conveyor means (2,3), a pressure roller (5) located above said conveyor means, means (51-53) for rolling said roller on the surface of dough (1) thereon in a direction transverse to the travelling direction of the conveyor means, and means (8,81) for reciprocating the roller in the said travelling direction.

8. Apparatus as claimed in claim 7, including at least one further pressure roller (4,4′) located above the said conveyor means downstream of the first-mentioned roller (5), means (71,42,43) for rolling said further roller on the surface of the dough (1) in a direction parallel to the travelling direction of the dough, and means (8,81) for reciprocating said further roller in the said travelling direction.

9. Apparatus as claimed in claim 8, wherein all of the said rollers (4,4′,5) are mounted in a common frame (6) which is reciprocable as aforesaid in the travelling direction by said reciprocating means (8,81).

10. Apparatus as claimed in claim 8 or 9, wherein two of said further rollers (4,4′) are provided, in series in the said travelling direction.

11. Apparatus as claimed in any of claims 7 to 10, wherein the said conveyor means comprises at least two conveyors (2,3), and means for driving the downstream conveyor (3) faster than the upstream conveyor.

12. Apparatus as claimed in claim 11, wherein the first-mentioned pressure roller (5) is located above the said upstream conveyor (2).

13. Apparatus as claimed in claim 11 or 12, when dependent on claim 10, wherein the boundary between the said conveyors (2,3) is located between the two said further rollers (4,4').

14. Apparatus for stretching dough, comprising a plurality of conveyors (2,3) disposed in series, the downstream conveyor being arranged to move at a higher speed than the upstream conveyor, a first roller (5) having its axis aligned parallel to the travelling direction of the conveyors, means (51,53) for reciprocating the said first roller over a given distance (l₂) in a direction transverse to the said travelling direction, means (8,81) for reciprocating said first roller over a given distance (l₁) in the travelling direction, at least one second roller (4,4') disposed downstream of the first roller with its axis positioned at right angles to the travelling direction, and means (8,81) for reciprocating said second roller over a given distance (l₁) in the travelling direction in synchronism with the first roller.

15. Apparatus as claimed in claim 14, in which the said first (5) and the second (4,4') rollers are rotatably mounted to a frame (6) positioned above the said conveyors (2,3).

## Patentansprüche

1. Verfahren zum Strecken von Teig (1), der sich auf einer Föderereinrichtung bewegt, umfassend das Rollen einer Druckrolle (5) auf der Oberfläche des Teigs in einer Richtung quer zu der Bewegungsrichtung des Teigs, während die Rolle in der genannten Bewegungsrichtung hin- und herbewegt wird.

2. Verfahren nach Anspruch 1, umfassend das Rollen wenigstens einer weiteren Druckrolle (4, 4') auf der Oberfläche des Teigs in einer Richtung parallel zu der Bewegungsrichtung des Teigs, während die weitere Rolle in der Bewegungsrichtung hin- und herbewegt wird, wobei diese weitere Rolle stromabwärts der zuerst genannten Rolle angeordnet ist.

3. Verfahren nach Anspruch 2, bei welchem zwei der weiteren Rollen (4, 4') in der genannten Bewegungsrichtung in Reihe vorgesehen sind.

4. Verfahren nach irgendeinem der Ansprüche 1 bis 3, bei welchem die Förderereinrichtung wenigstens zwei Förderer (2, 3) aufweist, die in Reihe angeordnet sind, wobei der stromabwärtige Förderer (3) sich schneller als der stromaufwärtige Förderer (2) bewegt.

5. Verfahren nach Anspruch 4, bei welchem die zuerst genannte Druckrolle (5) immer oberhalb des stromaufwärtigen Förderers (2) angeordnet ist.

6. Verfahren nach Anspruch 4 oder 5, wenn abhängig von Anspruch 3, bei welchem die Grenze zwischen den Förderern (2, 3) zwischen den beiden weiteren Rollen (4, 4') liegt.

7. Vorrichtung zum Ausführen des Verfahrens nach Anspruch 1, umfassend eine Teigförderereinrichtung (2, 3), eine Druckrolle (5), die über der Förderereinrichtung angeordnet ist, eine Einrichtung (51 bis 53) zum Rollen der genannten Rolle auf der Oberfläche von Teig (1) in einer Richtung quer zur Bewegungsrichtung der Förderereinrichtung, und eine Einrichtung (8, 81) zum Hin- und Herbewegen der Rolle in der genannten Bewegungsrichtung.

8. Vorrichtung nach Anspruch 7, umfassend wenigstens eine weitere Druckrolle (4, 4'), die über der Förderereinrichtung stromabwärts der zuerst genannten Rolle (5) angeordnet ist, eine Einrichtung (71, 42, 43) zum Rollen der weiteren Rolle auf der Oberfläche des Teigs (1) in einer Richtung parallel zu der Bewegungsrichtung des Teigs, und eine Einrichtung (8, 81) zum Hin- und Herbewegen der weiteren Rolle in der genannten Bewegungsrichtung.

9. Vorrichtung nach Anspruch 8, bei welcher alle die genannten Rollen (4, 4', 5) in einem gemeinsamen Rahmen (6) angebracht sind, die, wie zuvor gesagt, in der Bewegungsrichtung hin- und herbewegbar ist durch die Hin- und Herbewegungseinrichtung (8, 81).

10. Vorrichtung nach Anspruch 8 oder 9, bei welcher zwei der weiteren Rollen (4, 4') in der genannten Bewegungsrichtung in Reihe vorgesehen sind.

11. Vorrichtung nach irgendeinem der Ansprüche 7 bis 10, bei welcher die Förderereinrichtung wenigstens zwei Förderer (2, 3) sowie eine Einrichtung aufweist zum Antreiben des stromabwärtigen Förderers (3) mit einer höheren Geschwindigkeit als den stromaufwärtigen Förderer.

12. Vorrichtung nach Anspruch 11, bei welcher die zuerst genannte Druckrolle (5) über dem stromaufwärtigen Förderer (2) angeordnet ist.

13. Vorrichtung nach Anspruch 11 oder 12, wenn abhängig von Anspruch 10, bei welcher die Grenze zwischen den Förderern (2, 3) zwischen den beiden genannten weiteren Rollen (4, 4') liegt.

14. Vorrichtung zum Strecken von Teig, umfassend eine Mehrzahl von Förderern (2, 3), die in Reihe angeordnet sind, wobei der stromabwärtige Förderer sich mit einer höheren Geschwindigkeit als der stromaufwärtige Förderer bewegen kann, eine erste Rolle (5), deren Achse parallel zu der Bewegungsrichtung der Förderer ausgerichtet ist, eine Einrichtung (51, 53) zum Hin- und Herbewegen der genannten ersten Rolle über eine gegebene Strecke (l₂) in einer Richtung quer zu der genannten Bewegungsrichtung, eine Einrichtung (8, 81) zum Hin- und Herbewegen der genannten ersten Rolle über eine gegebene Strecke (l₁) in der Bewegungsrichtung, wenigstens eine zweite Rolle (4, 4'), die stromabwärts der ersten Rolle so angeordnet ist, daß ihre Achse im rechten Winkel zu der Bewegungsrichtung verläuft, und eine Einrichtung (8, 81) zum Hin- und Herbewegen der genannten zweiten Rolle über eine gegebene Strecke (l₁) in der Bewegungsrichtung in Synchronismus mit der ersten Rolle.

15. Vorrichtung nach Anspruch 14, in welcher die genannte erste (5) und die zweite oder zweiten (4, 4') Rollen an einem Rahmen (6) drehbar angebracht sind, der über den Förderern (2, 3) angeordnet ist.

## Revendications

1. Procédé d'étirage d'une pâte (1) se déplaçant sur des moyens transporteurs, consistant à faire rouler un rouleau presseur (5) sur la surface de la pâte dans une direction transversale à la direction de déplacement de la pâte, tout en faisant exécuter un mouvement alternatif au rouleau dans ladite direction de déplacement.

2. Procédé selon la revendication 1, consistant à faire rouler au moins un autre rouleau presseur (4, 4') sur la surface de la pâte dans une direction parallèle à la direction de déplacement de la pâte, tout en faisant exécuter un mouvement alternatif audit autre rouleau dans la direction de déplacement, ledit autre rouleau étant placé en aval du premier rouleau cité.

3. Procédé selon la revendication 2, dans lequel deux desdits autres rouleaux (4, 4') sont prévus, en série dans ladite direction de déplacement.

4. Procédé selon l'une quelconque des revendications 1 à 3, dans lequel lesdits moyens transporteurs comprennent au moins deux transporteurs (2, 3) disposés en série, le transporteur d'aval (3) se déplaçant plus vite que le transporteur d'amont (2).

5. Procédé selon la revendication 4, dans lequel le premier rouleau presseur cité (5) est toujours placé au-dessus dudit transporteur d'amont (2).

6. Procédé selon la revendication 4 ou 5, en dépendance de la revendication 3, dans lequel la limite entre lesdits transporteurs (2, 3) est située entre lesdits deux autres rouleaux (4, 4').

7. Appareil pour la mise en oeuvre du procédé de la revendication 1, comportant des moyens transporteurs de pâte (2, 3), un rouleau presseur (5) placé au-dessus des moyens transporteurs, des moyens (51-53) destinés à faire rouler ledit rouleau sur la surface de la pâte (1) portée par lesdits moyens transporteurs, dans une direction transversale à la direction de déplacement des moyens transporteurs, et des moyens (8, 81) destinés à faire exécuter un mouvement alternatif au rouleau dans ladite direction de déplacement.

8. Appareil selon la revendication 7, comprenant au moins un autre rouleau presseur (4, 4') placé au-dessus desdits moyens transporteurs en aval du premier rouleau cité (5), des moyens (71, 42, 43) destinés à faire rouler ledit autre rouleau sur la surface de la pâte (1) dans une direction parallèle à la direction de déplacement de la pâte, et des moyens (8, 81) destinés à faire exécuter un mouvement alternatif audit autre rouleau dans ladite direction de déplacement.

9. Appareil selon la revendication 8, dans lequel la totalité desdits rouleaux (4, 4', 5) est montée dans un châssis commun (6) qui peut être animé d'un mouvement alternatif tel que précité dans la direction de déplacement par lesdits moyens (8, 81) destinés à faire exécuter un mouvement alternatif.

10. Appareil selon la revendication 8 ou 9, dans lequel deux desdits autres rouleaux (4, 4') sont prévus, en série dans ladite direction de déplacement.

11. Appareil selon l'une quelconque des revendications 7 à 10, dans lequel lesdits moyens transporteurs comprennent au moins deux transporteurs (2, 3), et des moyens destinés à entraîner le transporteur d'aval (3) plus vite que le transporteur d'amont.

12. Appareil selon la revendication 11, dans lequel le premier rouleau presseur cité (5) est placé au-dessus du transporteur d'amont (2).

13. Appareil selon la revendication 11 ou 12, en dépendance de la revendication 10, dans lequel la limite entre lesdits transporteurs (2, 3) est située entre lesdits deux autres rouleaux (4, 4').

14. Appareil pour étirer la pâte, comportant plusieurs transporteurs (2, 3) disposés en série, le transporteur d'aval étant agencé de façon à se déplacer à une vitesse supérieure à celle du transporteur d'amont, un premier rouleau (5) ayant son axe aligné parallèlement à la direction de déplacement des transporteurs, des moyens (51, 53) destinés à faire exécuter un mouvement alternatif audit premier rouleau sur une distance donnée (l₂) dans une direction transversale à ladite direction de déplacement, des moyens (8, 81) destinés à faire exécuter un mouvement alternatif audit premier rouleau sur une distance donnée (l₁) dans la direction de déplacement, au moins un second rouleau (4, 4') disposé en aval du premier rouleau de façon que son axe soit positionné à angle droit avec la direction de déplacement, et des moyens (8, 81) destinés à faire exécuter un mouvement alternatif audit second rouleau sur une distance (l₁) dans la direction transversale, en synchronisme avec le premier rouleau.

15. Appareil selon la revendication 14, dans lequel lesdits premier (5) et second (4, 4') rouleaux sont montés de façon à pouvoir tourner sur un châssis (6) positionné au-dessus desdits transporteurs (2, 3).
